# EUROPEAN PATENT SPECIFICATION

(11) **EP 2 036 804 B1**
(45) Date of publication and mention of the grant of the patent: **21.05.2014**
(21) Application number: 08009951.8
(22) Date of filing: 30.05.2008
(51) Int. Cl.: B62J 1/12, B62K 19/46

(54) **Straddle-type vehicle**
Grätschsitz-Fahrzeug
Véhicule de type monté à califourchon

(30) Priority: 14.09.2007 JP 2007239292
(43) Date of publication of application: 18.03.2009
(73) Proprietor: Yamaha Hatsudoki Kabushiki Kaisha, Iwata-shi, Shizuoka-ken 438-8501 (JP)
(72) Inventor: Hirakawa, Nobuhiko, Iwata-shi, Shizuoka-ken 438-8501 (JP); Tominaga, Shuji, Iwata-shi, Shizuoka-ken 438-8501 (JP)
(74) Representative: Grünecker, Kinkeldey, Stockmair & Schwanhäusser

(56) References cited:
- EP-A- 1 063 153
- EP-A- 1 245 481
- EP-A- 1 557 349
- US-A- 5 107 949

## Description

The present invention relates to a straddle-type vehicle according to the preamble of claim 1. Such a straddle-type vehicle is known from EP 1 245 481 A1. Specifically, the present invention relates to a straddle-type vehicle which can be driven by a rider in a straddle position so as to straddle a frame of said vehicle, in particular a motorcycle, having: a seat supported in a vertically swingable manner by a body frame through a hinge member; and an urging force generating mechanism for applying urging force to the seat in its opening direction.

For example, in general, a scooter-type motorcycle has a structure in which a storage box is disposed below the seat mounted on the body frame, and an upper end aperture of the storage box is openable and closable by the seat.

Occasionally, in this type of motorcycle, urging force is applied to the seat in its opening direction in order to facilitate operation to open/close the seat, and a damper (urging force generating mechanism) is disposed to hold the seat at its fully-opened position. JP-Y-Sho 61-24469 discloses a structure used for the motorcycle, in which the seat is supported at its rear end in the vertically swingable manner by the body frame through a hinge shaft, the damper is oriented in the longitudinal direction on the underside of the seat, and a front end of the damper is coupled with the body frame, while a rear end of the damper is coupled with a bottom plate of the seat.

In such a conventional structure, the front end of the damper is coupled with the body frame, while the rear end of the damper is coupled with the seat. This causes the damper to be located obstructing a space between the seat and the body frame, when the seat is opened. Thus, there is a problem with the damper which interferes with loading and unloading of luggage or maintenance.

The present invention is made in view of the foregoing circumstances, and an objective of the invention is to provide a straddle-type vehicle which facilitates loading and unloading of luggage and maintenance to be performed below the seat.

According to the present invention, said objective is achieved by a straddle-type vehicle according to claim 1. Such a straddle-type vehicle, in particular motorcycle, comprises: a body frame; a seat supported by the body frame through a hinge member in a vertically swingable manner; and an urging force generating mechanism for applying urging force to the seat in an opening direction, the urging force generating mechanism being axially extendable so as to generate an axial urging force, one end of the urging force generating mechanism and the other end thereof being coupled with the body frame and the seat, respectively, wherein a frame-side coupling point of the urging force generating mechanism is located in proximity to the hinge member.

With regard to a front-rear direction of the straddle-type vehicle, the seat is supported at a rear end of the straddle-type vehicle by the body frame through the hinge member, thereby allowing the seat to swing vertically.

Further, the urging force generating mechanism is coupled to the seat at a seat-side coupling point, the frame-side coupling point being located rearwardly relative to said seat-side coupling point in front-rear direction of the straddle-type vehicle and closer to the swing motion axis of the hinge member than to the seat-side coupling point.

Still further, the frame-side coupling point, at which the urging force generating mechanism is coupled to the body frame, is provided at a location between the seat-side coupling point and a swing motion axis of the hinge member in a front-rear direction of the straddle-type vehicle.

Yet further still, preferably the frame-side coupling point is located on the opposite side of the seat with respect to a straight line connecting the seat-side coupling point and the swing motion axis of the hinge member.

Preferably, the urging force generating mechanism is configured to generate urging force in an extending direction of said urging force generating mechanism.

Further, a storage box is disposed on the body frame, and the seat is configured to open and close a upper end aperture of a container section of said storage box.

Still further, preferably the urging force generating mechanism is located such that at least the frame-side coupling point is located in front-rear direction of the straddle-type vehicle rearwardly of the storage box.

Yet further still, the seat-side coupling point of the urging force generating mechanism is located in front-rear direction of the straddle-type vehicle rearwardly of a rear end surface of the container section of the storage box, when the seat is closed.

According to a preferred embodiment, the urging force generating mechanism is tilted downwardly to the front of the straddle-type vehicle, when the seat is closed, or when the seat is in its substantially horizontal position.

According to another preferred embodiment, a plurality of, preferably a pair of, urging force generating mechanisms are provided, which are arranged side by side in a width direction of the straddle-type vehicle.

Preferably, the urging force generating mechanisms are provided on the left and right sides of the seat.

Further, preferably the urging force generating mechanism is coupled to the seat by means of a ball joint.

Still further, preferably the urging force generating mechanism comprises a spring and, preferably, a hydraulic or friction-type damping mechanism.

In the following, the present invention is explained in greater detail with respect to several embodiments thereof in conjunction with the accompanying drawings, wherein:
- FIG. 1: is a side view of a scooter-type motorcycle (straddle-type vehicle) according to an embodiment;
- FIG. 2: is a top plan view of the motorcycle;
- FIG. 3: is a side view of a seat area of the motorcycle;
- FIG. 4: is a side view of a hinge member and a damper of the seat;
- FIG. 5: is a sectional view of the hinge member (a sectional view taken along the line V-V in FIG. 4);
- FIG. 6: is a side view showing the motion about the hinge member;
- FIG. 7: is a top plan view of the damper;
- FIG. 8: is a sectional view of a seat-side coupling point of the damper (a sectional view taken along the line VIII-VIII in FIG. 4); and
- FIG. 9: is a sectional view of a part of the hinge member on the side fixed to the seat (a sectional view taken along the line IX-IX in FIG. 4).

Among others, the following reference signs are used in the figures:
1: scooter-type motorcycle (straddle-type vehicle)
2: body frame
9: seat
10: storage box
13: left and right rear frame section (body frame)
13b: rear cross section (body frame)
23: damper (urging force generating mechanism)
50: hinge member
53: hinge shaft
A:body frame-side coupling point
B:seat-side coupling point
D:straight line

One embodiment will be described below with reference to the accompanying drawings.

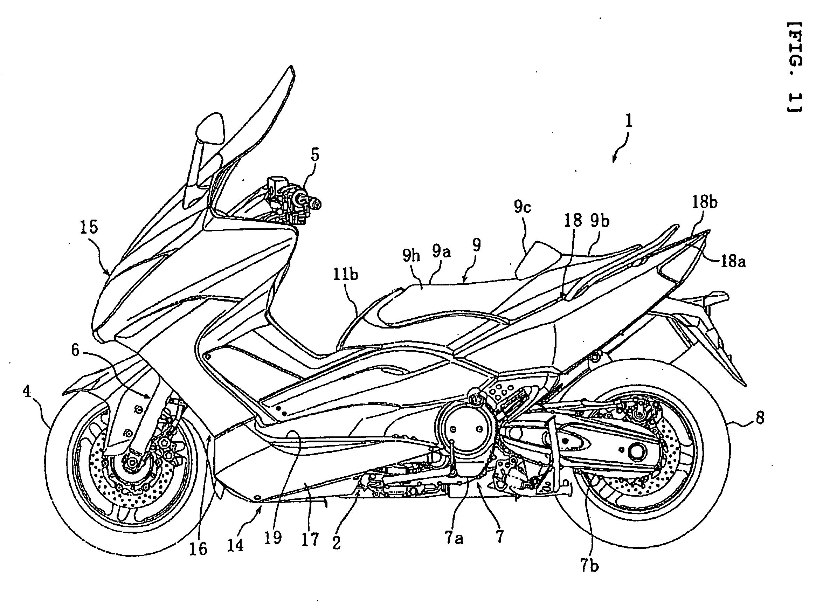

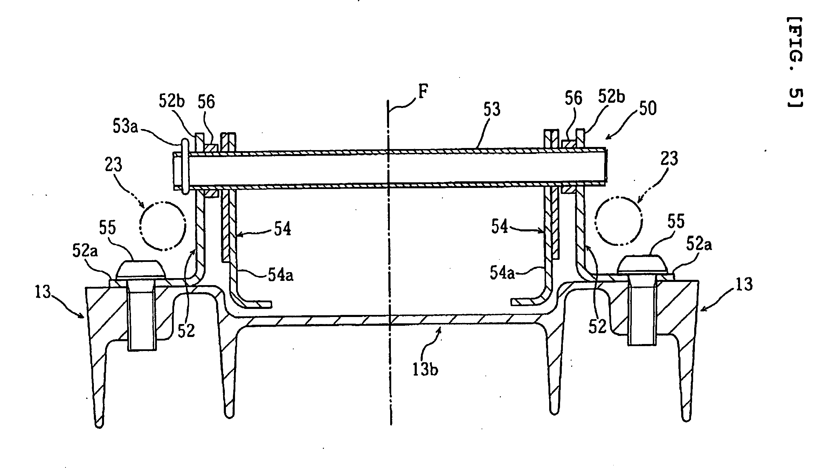

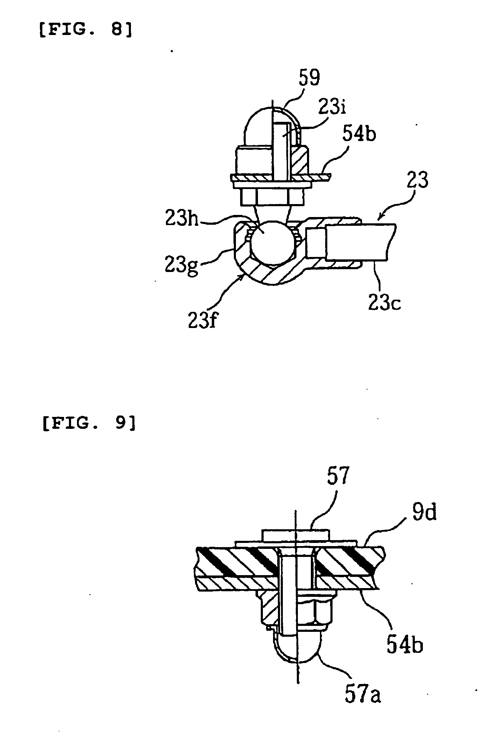

FIGs. 1 to 9 illustrate a motorcycle (straddle-type vehicle) according to one embodiment. Therein, in general, a straddle-type vehicle is a vehicle having a body frame and a seat on which a rider can be seated straddling the body frame when being seated. Unless otherwise specified, the terms "right," "left," "front" and "rear" used in this embodiment refer to the right, left, front and rear sides when viewed from a rider seated on the seat.

In these figures, a reference numeral 1 designates a scooter-type motorcycle. The motorcycle 1 has: an underbone type body frame 2; a front fork 6, which is supported steerably to the left and right by a head pipe (not shown) located at a front end of the body frame 2, and which places a front wheel 4 and steering handlebars 5 at a bottom end and a top end of the front fork 6, respectively; an engine unit 7, which is mounted to the body frame 2 at its middle part in the front-rear direction, and which places a rear wheel 8 at a rear end of the engine unit 7; and a straddle seat 9 for two riders mounted to the body frame 2 above the engine unit 7.

The body frame 2 is provided with: a front frame (not shown) having left and right front frame sections extending from the head pipe obliquely downward to the rear; and a rear frame 13' having left and right rear frame sections 13, 13 extending from the left and right front frame sections obliquely upward to the rear.

The engine unit 7 has: an engine body 7a fixed to the body frame 2; and a transmission case 7b, supported in the vertically swingable manner by the engine body 7a, for transmitting engine power to the rear wheel 8 pivotally supported at a rear end of the transmission case 7b.

The body frame 2 is enclosed with a resinous body cover 14. The body cover 14 has: a front cover 15 for covering the front, left and right sides of the front fork 6; a leg shield 16, located rearward from the front cover 15, for covering the front of the rider's legs; left and right side covers 18, 18 for covering the area around and beneath the seat 9 and the left and right sides of the engine body 7a; and left and right under covers 17, 17 for covering the area below the side cover 18.

Left and right low footboards 19, 19, forming footrests for the rider, are disposed between the left and right side covers 18 and the left and right under covers 17.

A storage box 10 is disposed on the body frame 2 below the seat 9. To be more specific, the storage box 10 is located between the left and right rear frame sections 13, 13 of the rear frame 13' and is removably fixed to the left and right rear frame sections 13, 13 with plural bolts 46.

The storage box 10 has a container section 10a with a capacity sufficient to accommodate therein a helmet and the like. The container section 10a has an upper end aperture 10a' that is opened or closed by the seat 9.

A fuel tank 11 is disposed in front of the container section 10a of the storage box 10. The storage box 10 has a load-receiving member 10b for receiving load of the rider applied to the seat 9. To be more specific, the storage box 10 is located between the left and right rear frame sections 13, 13 of the rear frame 13' and is removably fixed to the left and right rear frame sections 13, 13 with the plural bolts 46.

The load-receiving member 10b is formed together with the storage box 10 into a single unit. The load-receiving member 10b has a shape extending along an outer surface shape of the fuel tank 11, and not contacting the fuel tank 11, and is fixed to the body frame 2.

The fuel tank 11 has a fuel cap 11a fitted to its upper wall. The fuel cap 11a is designed to open and close a fuel inlet. The fuel cap 11 a is exposed from above by tilting a lid 11 b forward about its bottom edge, the lid 11 b being located on the forward side of the seat 9.

The upper end aperture 10a' of the storage box 10 is at a location higher than top edges of the left and right rear frame sections 13, 13, and is covered by the seat 9 such that the upper end aperture 10a' is openable and closable. The storage box 10 has a bottom wall 10c that is formed into a shape generally extending along bottom edges of the left and right rear frame sections 13, 13, when viewed from the side of the vehicle.

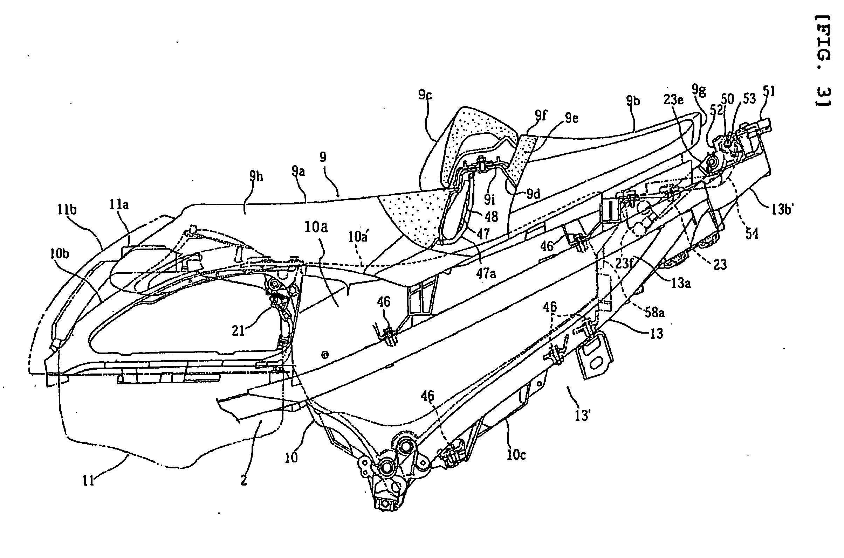

As shown in FIG. 3, the seat 9 has a front seat 9a for a driver and a rear seat 9b for a passenger, which are formed together into a single unit. The rear seat 9b is formed at a location higher than the front seat 9a and is slightly tilted downward to the front, when viewed from the side. The seat 9 has a structure in which a seat cushion 9e is disposed on a resinous seat bottom plate 9d, and an outer surface of the seat cushion 9e is covered with an outer cover 9f.

The front seat 9a has narrowed sections 9h, 9h on its forward-left and -right sides. The narrowed sections 9h, 9h are formed such that the dimension of the forward part of the front seat 9a is smaller than the dimension of the rearward part thereof in the vehicle width direction. This allows the rider's feet to be more firmly on the ground.

A backrest 9c for supporting the rider's lower back is disposed on the border between the front seat 9a and the rear seat 9b. Below the backrest 9c, a storage section 9i is formed by protruding the seat bottom plate 9d upward into a convex shape. In the storage section 9i, a tool kit 47 and a helmet hanger 48 are accommodated and secured with a rubber band 47a.

A seat lock mechanism 21 for locking the seat 9 to its fully-closed position is disposed between the storage box 10 and the load-receiving member 10b below the front seat 9a.

The seat 9 is supported at its rear end by the left and right rear frame sections 13, 13 of the rear frame 13' at their rear ends through a hinge member 50. This allows the seat 9 to swing vertically. In addition, an axially extendable damper (a urging force generating mechanism) 23 for applying urging force to the seat 9 in its opening direction is each disposed between the left and right rear frame sections 13, 13 and the seat 9. Details of the structure of the dampers 23 will be described below.

The rear frame 13' is a single-piece casting made up of: the left and right rear frame sections 13, 13; a front cross section 13c for connecting the front end top edges of the left and right rear frame sections 13, 13 to each other; and a rear cross section 13b for connecting the rear end top edges of the left and right rear frame sections 13, 13 to each other. The left and right rear frame sections 13, 13 have left and right generally triangular sidewall surfaces 13a, 13a, respectively, whose vertical dimension is smaller toward the rear, when viewed from the side of the vehicle. When viewed in a cross-section taken along a line perpendicular to a center line F extending in the vehicle front-rear direction, the left and right sidewall surfaces 13a, 13a are oriented such that a distance therebetween in the vehicle width direction is longer toward the top. The storage box 10 is disposed between the left and right sidewall surfaces 13a, 13a.

The rear cross section 13b has a seat support 13b' protruding from and formed integral with the rear cross section 13b, such that the seat support 13b' is located at the rear of a rear end surface 9g of the seat 9. The hinge member 50 is disposed above the seat support 13b'. A reference numeral 51 designates a tail light mounting bracket that is fixed to the rear cross section 13b with a bolt to protrude rearward from the rear cross section 13b.

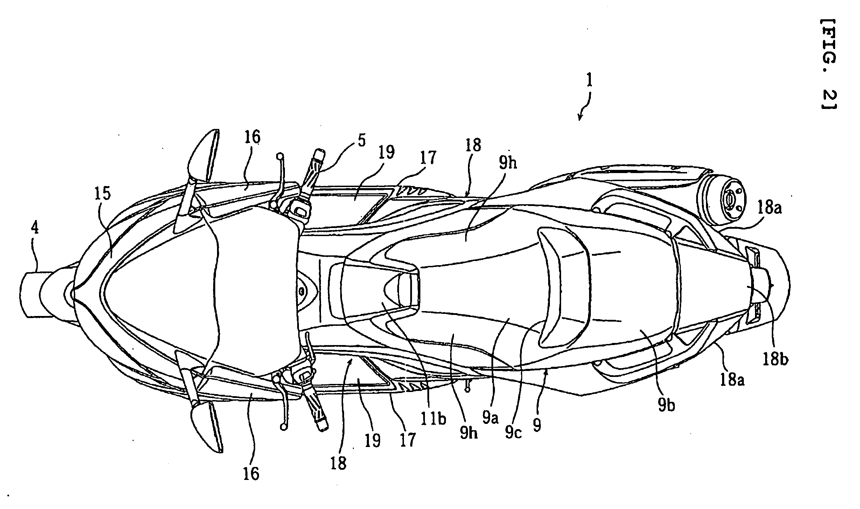

The left and right side covers 18 have respective rear ends 18a, 18a and a tail cover 18b located on the top ends of the left and right rear ends 18a. The rear cross section 13b, the hinge member 50 and the bracket 51 are covered with the rear ends 18a and the tail cover 18b (see FIGs. 1 and 2).

The hinge member 50 is provided with left and right hinge plates 52, 52 fixed to the seat support 13b', a cylindrical hinge shaft 53 disposed across the left and right hinge plates 52, 52, and left and right hinge arms 54, 54 fixed by the hinge shaft 53, extending forward in the vehicle, and then fixed to the seat 9.

Each of the hinge plates 52 has: a flange 52a fixed with a pair of front and rear bolts 55, 55 to the topside of the seat support 13b' at its left or right edge; and a plate body 52b extending upward from an inner edge of the flange 52a. The plate body 52b has a damper support 52f protruding forward from the plate body 52b.

The hinge shaft 53 runs through the left and right plate bodies 52b, and is rotatably supported by bearing members 56, 56 fixed to the inner side of the respective plate bodies 52b. The hinge shaft 53 has a retaining pin 53a fitted thereonto at the outer side of the plate body 52b.

The left and right hinge arms 54 are fixed to the hinge shaft 53 at the inner side of the respective bearing members 56. The left and right hinge arms 54 each have: a vertical side 54a extending obliquely downward from the hinge shaft 53 to the front; and a horizontal side 54b extending forward from a bottom end of the vertical side 54a generally in the horizontal direction, when the seat 9 is fully closed. An inverted triangle-shaped damper coupling section 54c is formed extending downward from the horizontal side 54b. The vertical side 54a and the horizontal side 54b have an J-shape overall, which prevents the hinge arm 54 from interfering with the tail cover 18b when the seat 9 is opened or closed.

The horizontal side 54b of each hinge arm 54 is fixed to the downside of the seat bottom plate 9d with a pair of front and rear bolts 57 and nuts 57a. A portion of the seat bottom plate 9d, to which the hinge arm 54 is fixed, is formed in thickness greater than the other portions of the seat bottom plate 9d. The nuts 57a respectively use a cap nut not to expose the nuts when the seat is fully opened, which otherwise causes an unpleasant appearance.

A switch 58 is installed to the left plate body 52b. The switch 58 is designed to turn on a lamp 58a, attached to a rear wall of the storage box 10, when the seat 9 is opened, or turn off the lamp 58a when the seat 9 is closed.

The left and right hinge plates 52 each have a stopper 52c at their respective top edges. The stopper 52c is bent toward the center of the vehicle. The left and right hinge arms 54 each have a contact section 54d which comes in contact with the stopper 52c in order to regulate the position of the seat 9 at its fully-opened position. The seat 9 swings by a predetermined angle of about 70 degrees from its fully-closed position to its fully-opened position.

The dampers 23 are extendable (stroke) dampers designed to generate axial urging force in the extending direction. The dampers 23 are provided on both the left and right sides in the vehicle width direction and are oriented in the vehicle front-rear direction to be tilted downward to the front. Details of the structure of the dampers 23 will be described below.

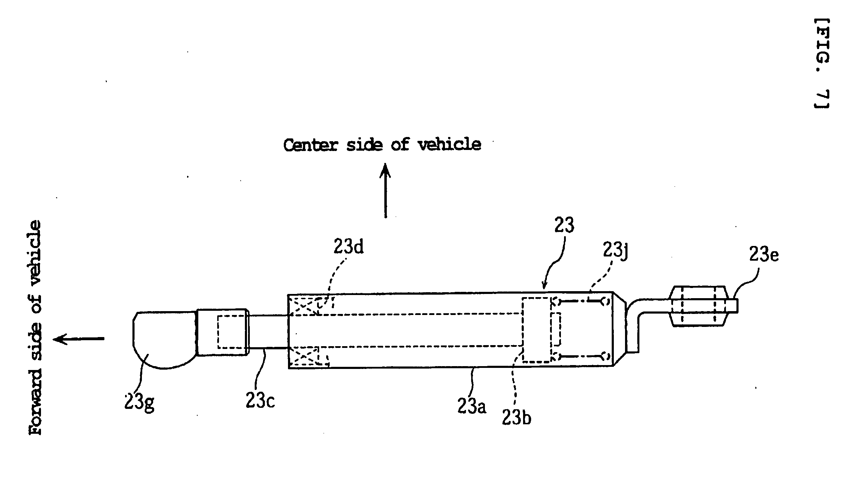

The left and right dampers 23, 23 each have: a bottomed cylindrical cylinder 23a with hydraulic oil and high-pressure gas filled in; a piston 23b inserted into the cylinder 23a to be freely slidable within the cylinder 23a; a spring 23j interposed between the cylinder 23a and the piston 23b; a piston rod 23c whose one end is coupled with the piston 23b and other end protrudes outward from the cylinder 23a; and a seal member 23d fitted to the cylinder 23a at its opening and slidably contacting the piston rod 23c in an oil-tight manner (see FIG. 7).

A coupling bracket 23e is connected to a bottom-side end of the cylinder 23a with the axis of the coupling bracket 23e offset toward the center of the vehicle with respect to the axis of the cylinder 23a. The left and right hinge plates 52 each have a coupling pin 52e and a damper support 52f. The coupling bracket 23e is rotatably coupled with the damper support 52f through the coupling pin 52e. A ball joint 23f is connected to a distal end of the piston rod 23c. The ball joint 23f has: a ball case 23g fitted onto the distal end of the piston rod 23c; a ball 23h supported by the ball case 23g; and a bolt 23i connected to the ball 23h. The bolt 23i is secured to the damper coupling section 54c of the hinge arm 54 with a cap nut 59.

The left and right dampers 23 are disposed such that a seat-side coupling point B thereof is located rearward relative to a rear end surface 10d of the container section of the storage box 10, when the seat is closed. The left and right dampers 23 are also disposed adjacent to the inner sides of the left and right rear frame sections 13, respectively, and below the rear seat 9b.

The left and right dampers 23 are oriented to be tilted downward to the front when the seat 9 is fully closed. In the embodiment, the dampers 23 are tilted by an angle of about 40 degrees with respect to the horizontal line.

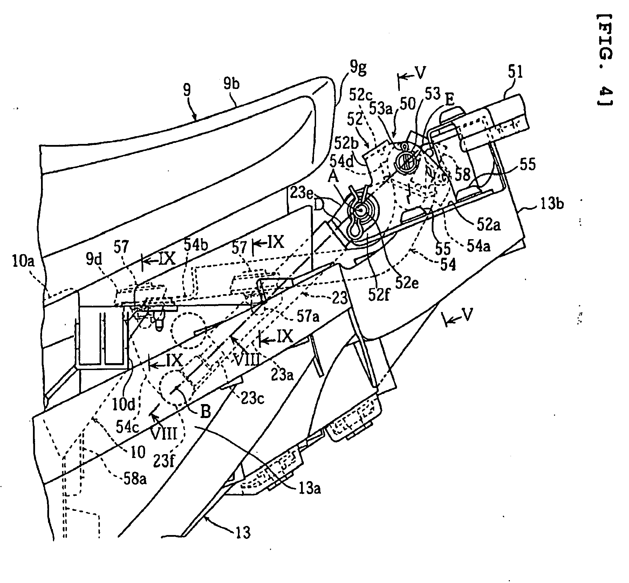

As shown in FIG. 4, a frame-side coupling point A of the dampers 23 of this embodiment is at a location rearward and higher than the seat-side coupling point B in the vehicle. In terms of the positional relationship in the vehicle front-rear direction, the frame-side coupling point A is located between the seat-side coupling point B and a swing motion axis E of the hinge member 50, and closer to the swing motion axis E. In other words, the frame-side coupling point A is located in proximity of the hinge member 50 and lower than the swing motion axis E.

The frame-side coupling point A of the left and right dampers 23 is located rearward relative to the rear end surface 9g of the seat 9. The seat-side coupling point B of the left and right dampers 23 is located forward relative to the rear end surface 9g of the seat 9 and rearward relative to the rear end surface 10d of the storage box 10.

Further, the frame-side coupling point A of the left and right dampers 23 is located on the opposite side of the seat 9 with respect to a straight line D connecting the seat-side coupling point B and the swing motion axis E of the hinge shaft 53. In other words, the frame-side coupling point A is located lower than the straight line D. This causes urging force of the dampers 23 to be applied to the seat 9 constantly in its opening direction. It should be noted that should the frame-side coupling point A be located on the side closer to the seat 9 with respect to the straight line D, or located higher than the straight line D, the urging force of the dampers 23 would be applied to the seat 9 in its closing direction.

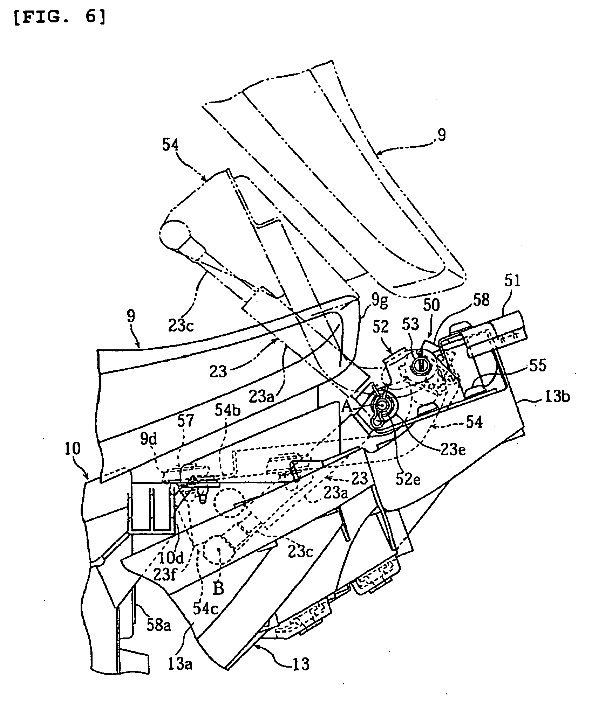

According to the embodiment, the seat 9 is supported at its rear end in the vertically swingable manner by the seat support 13b' through the hinge member 50, and the dampers 23 for applying urging force to the seat 9 in its opening direction are disposed such that the frame-side coupling point A of the dampers 23 is located rearward relative to the seat-side coupling point B in the vehicle. Thus, when the seat 9 is opened, the dampers 23 rotate with the seat 9, while being kept oriented along the bottom surface of the seat 9 (see FIG. 6). Therefore, the dampers 23 do not obstruct the space between the seat 9 and the body frame 2. Consequently, the dampers 23 do not interfere with loading and unloading of the helmet or luggage into and from the storage box 10 or maintenance of the fuel tank 11 and its surroundings. This improves the workability in the loading and unloading as well as in the maintenance.

According to the embodiment, the seat 9 is supported at its rear end by the rear end of the body frame 2 through the hinge member 50. This offers greater flexibility in design and configuration of the forward part of the seat 9. For example, the narrowed sections 9h are readily formed on the left and right sides of the front seat 9a, on which the rider is seated, without interference of the hinge member. This allows the rider's foot to be more firmly on the ground. It should be noted that should the hinge member be located at the front end of the seat, a space for placing the hinge member needs to be secured of the seat, which accordingly lower the flexibility in configuration of the forward part of the seat.

According to the embodiment, the frame-side coupling point A of the dampers 23 is located between the seat-side coupling point B and the swing motion axis E of the hinge shaft 53 and closer to the swing motion axis E. This avoids the interference of the dampers 23 and the hinge member 50, while increasing the angle at which the seat 9 is fully opened. Thereby, luggage is easily loaded in and unloaded from the storage box 10 located below the rear seat 9b.

The rear seat 9b of the seat 9 is disposed at a location higher than the front seat 9a in order to avoid the interference of the rear wheel 8 caused by its up-down stroke and to ensure a sufficient capacity of the storage box. In contrast, the front seat 9a is disposed at a location as low as possible in view of the rider's foot being more firmly on the ground. Thus, the seat 9 is tilted downward to the front. In order to open this seat 9 to a position that allows for loading and unloading of luggage, the angle at which the seat 9 is fully opened needs to be increased. According to the embodiment, the frame-side coupling point A of the dampers 23 is located forward relative to and closer to the swing motion axis E of the seat 9. This results in a shorter damper stroke to be required, while ensuring a greater angle at which the seat is fully opened. It should be noted that as the frame-side coupling point A is located apart from the swing motion axis E of the seat, a longer damper stroke is required.

According to the embodiment, the dampers 23 are disposed such that the frame-side coupling point A is located on the opposite side of the seat with respect to the straight line D connecting the seat-side coupling point B and the swing motion axis E of the hinge shaft 53, when the seat is fully closed. This enables urging force in the opening direction to be applied to the seat 9 at any position ranging from a fully-closed state to a fully-opened state, and therefore facilitates operation to open the seat. Assuming that the frame-side coupling point A is located on the side closer to the seat with respect to the straight line D, the urging force would be applied to the seat in its closing direction until the fully-closed seat is slightly opened or when the frame-side coupling point A crosses the straight line D from the side closer to the seat to the opposite side of the seat. Afterwards, the urging force would be applied to the seat in its opening direction. This creates a problem that the seat is undesirably heavy to open at the beginning.

According to the embodiment, the dampers 23 are oriented downward to the front such that part of each damper 23 on the piston rod 23c side is located relatively lower, when the seat is fully closed. This causes the seal member 23d to be constantly dipped in hydraulic oil, and high-pressure gas to stay above the surface of the hydraulic oil. Thus, no high-pressure gas directly contacts the seal member 23d, which prevents leakage of high-pressure gas and maintains the damper function for a long period of time.

According to the embodiment, the upper end aperture 10a' of the storage box 10 is openable and closable by the seat 9, and the dampers 23 are disposed such that the seat-side coupling point B thereof is located rearward relative to the rear end surface 10d of the storage box 10. Thus, the placement of the dampers 23 does not cause the reduced capacity of the storage box 10, and a larger-sized box can be disposed.

The dampers 23 are located at the rear of the storage box 10 and below the rear seat 9b and spaced therefrom. This ensures sufficient thickness of the seat cushion 9e of the rear seat 9b, and thus improves the passenger's riding comfort.

According to the embodiment, the seat 9 is wholly oriented to be slightly tilted downward to the front. This increases the effective clearance between the seat 9 and the storage box 10, even though the seat 9 swings by the same angle. In this point of view, the ease of loading and unloading luggage also improves.

According to the embodiment, the dampers 23 are disposed on both the left and right sides of the seat 9. This ensures, without using a large-sized damper, that urging force is applied to the large-sized seat 9 with its front seat 9a and rear seat 9b formed together into a single unit, while allowing the seat 9 to be kept upstanding at its fully-opened position.

In the above description of the embodiment, there are provided two of the dampers 23. However, it should be understood that there may be provided one of or more than two of the dampers in the embodiment.

In addition, in the above description of the embodiment, the urging force generating mechanism is a type of mechanism that generates urging force in the extending direction. However, it should be understood that the urging force generating mechanism may be another type of mechanism that generates urging force in the retracting direction.

Further, in the above description of the embodiment, the urging force generating mechanism is a damper-type mechanism having urging force of the spring and the hydraulic damping function. However, it should be understood that the urging force generating mechanism may be a combination of a friction-type damping mechanism, a coil spring and the like, other than the damper-type mechanism. It should be further understood that the urging force generating mechanism is designed to at least generate axial urging force, and may not necessarily have the damping function.

Still further, in the above description of the embodiment, the frame-side coupling point A is located to the seat-side coupling point B side from the swing motion axis E of the seat. However, it should be understood that the frame-side coupling point A is located at least rearward relative to the seat-side coupling point B in the vehicle front-rear direction in the embodiment, and may also be located rearward relative to the swing motion axis E of the seat.

Still further, in the above description of the embodiment, the seat-side coupling point B is disposed at a location rearward relative to the container section of the storage box 10, when the seat is closed. However, it should be understood that the seat-side coupling point B may be located overlapping the container section of the storage box, when viewed from the side of the vehicle.

Accordingly, the description above discloses (among others) an embodiment of a straddle-type vehicle comprising: a body frame; a seat supported by the body frame in a vertically swingable manner; and an urging force generating mechanism for applying urging force to the seat in an opening direction, wherein the seat is supported at a rear end thereof in a vehicle front-rear direction by the body frame through a hinge member, thereby allowing the seat to swing vertically, and the urging force generating mechanism is axially extendable and generates axial urging force, in which one end of the urging force generating mechanism and the other end thereof are coupled with the body frame and the seat, respectively, and a frame-side coupling point is located rearward relative to a seat-side coupling point in the vehicle front-rear direction and located in proximity the hinge member.

Accordingly, In the straddle-type vehicle, the urging force generating mechanism that generates urging force on the seat in its opening direction is designed to be axially extendable, and the frame-side coupling point thereof is located rearward relative to the seat-side coupling point in the vehicle. Thus, as the seat swings in its opening direction, the urging force generating mechanism swings in its opening direction about the frame-side coupling point located rearward in the vehicle front-rear direction, while being kept oriented along the seat. Consequently, the urging force generating mechanism does not obstruct a space between the seat and the body frame. Therefore, the urging force generating mechanism does not interfere with loading and unloading of luggage into and from a space below the seat used as a storage or maintenance of parts mounted below the seat and the like. This improves the workability in the loading and unloading as well as in the maintenance.

Moreover, the seat is supported at its rear end by the body frame through the hinge member. This offers greater flexibility in configuration of a front part of the seat. For example, the front part of the seat, on which a rider is seated, is narrowed in the vehicle width direction in order to allow the rider's foot to be more firmly on the ground. In such a case, the hinge member, which is located at the rear end of the seat, cannot possibly interfere with forming the narrow part of the seat, unlike a hinge member located at the front end of the seat.

Preferably, the frame-side coupling point of the urging force generating mechanism is provided at a location between the seat-side coupling point and a swing motion axis of the hinge member in terms of the positional relationship in the vehicle front-rear direction.

Preferably, the urging force generating mechanism is formed to generate urging force in an extending direction, and the frame-side coupling point is located on the opposite side of the seat with respect to a straight line connecting the seat-side coupling point and the swing motion axis of the hinge member.

Further, preferably a storage box is disposed on the body frame, the seat is disposed such that an upper aperture of the storage box is openable and closable by the seat, and the urging force generating mechanism is provided such that at least the frame-side coupling point is located rearward relative to the storage box.

Preferably, the seat-side coupling point of the urging force generating mechanism is provided at a location rearward relative to a container section of the storage box, when the seat is closed.

According to another preferred aspect, the urging force generating mechanism is oriented to be tilted downward to the front, when the seat is closed.

According to a further preferred aspect, there are provided a plurality of the urging force generating mechanisms, which are arranged side by side in a vehicle width direction.

In order to provide a straddle-type vehicle which facilitates loading and unloading of luggage as well as maintenance, it is suggested that a seat 9 is supported at a rear end of the seat 9 in the vehicle front-rear direction by a body frame 2 through a hinge shaft 53 in a vertically swinging manner. A damper (an urging force generating mechanism) 23 is a stroke damper that generates axial urging force. A frame-side coupling point A of the damper 23 is located rearward relative to a seat-side coupling point B of the damper 23 in the vehicle front-rear direction.

## Claims

1. Straddle-type vehicle, comprising:
a body frame (2);
a seat (9) supported by the body frame (2) through a hinge member (50) in a vertically swingable manner;
an urging force generating mechanism (23) for applying an urging force to the seat (9) in an opening direction, the urging force generating mechanism (23) being axially extendable so as to generate an axial urging force, one end of the urging force generating mechanism (23) and the other end thereof being coupled with the body frame (2) and the seat (9), respectively;
a frame-side coupling point (A) of the urging force generating mechanism (23) being located in proximity to the hinge member (50), the frame-side coupling point (A) being located between a seat-side coupling point (B) and a swing motion axis (E) of the hinge member (50) in a front-rear direction of the straddle-type vehicle,
with regard to the front-rear direction of the straddle-type vehicle, the seat (9) is supported at a rear end of the straddle-type vehicle by the body frame (2) through the hinge member (50), thereby allowing the seat (9) to swing vertically,
the frame-side coupling point (A) is located rearwardly relative to the seat-side coupling
point (B) in the front-rear direction of the straddle-type vehicle, a storage box (10) is disposed on the body frame (2), and the seat (9) is configured to open and close an upper end aperture (10') of a container section (10a) of said storage box (10), **characterized in that** the frame-side coupling point (A) is located closer to the swing motion axis (E) of the hinge member (50) than to the seat-side coupling point (B),
the seat-side coupling point (B) of the urging force generating mechanism (23) is located in the front-rear direction of the straddle-type vehicle rearwardly of a rear end surface (10d) of the container section (10a) of the storage box (10), when the seat (9) is closed,
and
the frame-side coupling point (A) is positioned higher than the seat-side coupling point (B) and lower than the swing motion axis (E) of the hinge member (50) of the seat (9) when the seat (9) is closed.

2. Straddle-type vehicle according to claim 1, **characterized in that** the frame-side coupling point (A) is located on an opposite side of the seat (9) with respect to a straight line (D) connecting the seat-side coupling point (B) and the swing motion axis (E) of the hinge member (50).

3. Straddle-type vehicle according to claim 1 or 2, **characterized in that** the urging force generating mechanism (23) is configured to generate the urging force in an extending direction of said urging force generating mechanism (23).

4. Straddle-type vehicle according to one of claims 1 to 3, **characterized in that** the urging force generating mechanism (23) is located such that at least the frame-side coupling point (A) is located in the front-rear direction of the straddle-type vehicle rearwardly of the storage box (10).

5. Straddle-type vehicle according to one of claims 1 to 4, **characterized in that** the urging force generating mechanism (23) is tilted downwardly to the front of the straddle-type vehicle, when the seat (9) is closed or in a substantially horizontal position.

6. Straddle-type vehicle according to one of claims 1 to 5, **characterized in that** the urging force generating mechanism (23) is coupled to the seat (9) by means of a ball joint (23f).

7. Straddle-type vehicle according to one of claims 1 to 6, **characterized in that** the urging force generating mechanism (23) comprises a spring.

8. Straddle-type vehicle according to claim 7, **characterized in that** the urging force generating mechanism (23) comprises a hydraulic or friction-type damping mechanism.

9. Straddle-type vehicle according to one of claims 1 to 8, **characterized in that** a plurality of urging force generating mechanisms (23) are provided, which are arranged side by side in a width direction of the straddle-type vehicle.

10. Straddle-type vehicle according to claim 9, **characterized in that** a pair of urging force generating mechanisms (23) is provided, one of which is provided on the left side of the seat (9), the other of which is provided on the right side of the seat (9).

## Patentansprüche

1. Grätschsitz-Fahrzeug, das umfasst:
einen Karosserierahmen (2);
einen Sitz (9), der von dem Karosserierahmen (2) über ein Scharnierelement (50) vertikal schwenkbar getragen wird;
einen Drückkraft-Erzeugungsmechanismus (23) zum Ausüben einer Drückkraft auf den Sitz (9) in einer Öffnungsrichtung, wobei der Drückkraft-Erzeugungsmechanismus (23) axial ausgefahren werden kann, um eine axiale Drückkraft zu erzeugen, und ein Ende des Drückkraft-Erzeugungsmechanismus (23) und das andere Ende desselben mit dem Karosserierahmen (2) bzw. dem Sitz (9) gekoppelt sind;
wobei sich ein Rahmenseiten-Kopplungspunkt (A) des Drückkraft-Erzeugungsmechanismus (23) in der Nähe des Scharnierelementes (50) befindet, sich der Rahmenseiten-Kopplungspunkt (A) zwischen einem Sitzseiten-Kopplungspunkt (B) und einer Schwenkbewegungs-Achse (E) des Scharnierelementes (50) in einer Längsrichtung des Grätschsitz-Fahrzeugs befindet,
der Sitz (9) in Bezug auf die Längsrichtung des Grätschsitz-Fahrzeugs an einem hinteren Ende des Grätschsitz-Fahrzeugs über das Scharnierelement (50) von dem Karosserierahmen (2) so getragen wird, dass der Sitz (9) vertikal geschwenkt werden kann,
sich der Rahmenseiten-Kopplungspunkt (A) in der Längsrichtung hinter dem Sitzseiten-Kopplungspunkt (B) des Grätschsitz-Fahrzeugs befindet, ein Aufbewahrungskasten (10) an dem Karosserierahmen (2) angeordnet ist und der Sitz (9) so eingerichtet ist, dass er eine obere Endöffnung (10') eines Behälterabschnitts (10a) des Aufbewahrungskastens (10) öffnet und schließt,
**dadurch gekennzeichnet, dass**
sich der Rahmenseiten-Kopplungspunkt (A) näher an der Schwenkbewegungs-Achse (E) des Scharnierelementes (50) befindet als der Sitzseiten-Kopplungspunkt (B),
sich der Sitzseiten-Kopplungspunkt (B) des Drückkraft-Erzeugungsmechanismus (23) in der Längsrichtung des Grätschsitz-Fahrzeugs hinter einer hinteren Endfläche (10d) des Behälterabschnitts (10a) des Aufbewahrungsbehälters (10) befindet, wenn der Sitz (9) geschlossen ist, und
der Rahmenseiten-Kopplungspunkt (A) höher positioniert ist als der Sitzseiten-Kopplungspunkt (B) und niedriger als die Schwenkbewegungs-Achse (E) des Scharnierelementes (50) des Sitzes (9), wenn der Sitz (9) geschlossen ist.

2. Grätschsitz-Fahrzeug nach Anspruch 1, **dadurch gekennzeichnet, dass** sich der Rahmenseiten-Kopplungspunkt (A) an einer Seite befindet, die dem Sitz in Bezug auf eine gerade Linie (D) gegenüberliegt, die den Sitzseiten-Kopplungspunkt (B) und die Schwenkbewegungs-Achse (E) des Scharnierelementes (50) verbindet.

3. Grätschsitz-Fahrzeug nach Anspruch 1 oder 2, **dadurch gekennzeichnet, dass** der Drückkraft-Erzeugungsmechanismus (23) so eingerichtet ist, dass er die Drückkraft in einer Ausfahrrichtung des Drückkraft-Erzeugungsmechanismus (23) erzeugt.

4. Grätschsitz-Fahrzeug nach einem der Ansprüche 1 bis 3, **dadurch gekennzeichnet, dass** der Drückkraft-Erzeugungsmechanismus (23) so angeordnet ist, dass sich wenigstens der Rahmenseiten-Kopplungspunkt (A) in der Längsrichtung des Grätschsitz-Fahrzeugs hinter dem Aufbewahrungskasten (10) befindet.

5. Grätschsitz-Fahrzeug nach einem der Ansprüche 1 bis 4, **dadurch gekennzeichnet, dass** der Drückkraft-Erzeugungsmechanismus (23) zu der Vorderseite des Grätschsitz-Fahrzeugs nach unten geneigt ist, wenn der Sitz (9) geschlossen ist oder sich in einer im Wesentlichen horizontalen Position befindet.

6. Grätschsitz-Fahrzeug nach einem der Ansprüche 1 bis 5, **dadurch gekennzeichnet, dass** der Drückkraft-Erzeugungsmechanismus (23) mittels eines Kugelgelenks (23f) mit dem Sitz (9) gekoppelt ist.

7. Grätschsitz-Fahrzeug nach einem der Ansprüche 1 bis 6, **dadurch gekennzeichnet, dass** der Drückkraft-Erzeugungsmechanismus (23) eine Feder umfasst.

8. Grätschsitz-Fahrzeug nach Anspruch 7, **dadurch gekennzeichnet, dass** der Drückkraft-Erzeugungsmechanismus (23) einen Hydraulik- oder Reibungs-Dämpfmechanismus umfasst.

9. Grätschsitz-Fahrzeug nach einem der Ansprüche 1 bis 8, **dadurch gekennzeichnet, dass** mehrere Drückkraft-Erzeugungsmechanismen vorhanden sind, die in einer Breitenrichtung des Grätschsitz-Fahrzeugs nebeneinander angeordnet sind.

10. Grätschsitz-Fahrzeug nach Anspruch 9, **dadurch gekennzeichnet, dass** ein Paar Drückkraft-Erzeugungsmechanismen (23) vorhanden sind, von denen einer an der linken Seite des Sitzes (9) vorhanden ist und der andere an der rechten Seite des Sitzes (9) vorhanden ist.

## Revendications

1. véhicule à selle comprenant :
une ossature de cadre (2),
un siège (9) supporté par l'ossature de cadre (2) par l'intermédiaire d'un élément formant articulation (50) et pouvant basculer verticalement,
un mécanisme générant une force de sollicitation (23) permettant d'appliquer une force de sollicitation au siège (9) dans une direction d'ouverture, le mécanisme de génération de force de sollicitation (23) pouvant s'étendre axialement de façon à générer une force de sollicitation axiale, une extrémité du mécanisme de génération de force de sollicitation (23) et son autre extrémité étant accouplées respectivement avec l'ossature de cadre (2) et avec le siège,
un point d'accouplement sur le côté de l'ossature (A) du mécanisme de génération de force de sollicitation (23) étant situé à proximité de l'élément formant articulation (50), le point d'accouplement sur le côté de l'ossature (A) étant situé entre un point d'accouplement sur le côté du siège (B) et un axe de mouvement de basculement (E) de l'élément formant articulation (50) dans la direction avant arrière du véhicule à selle,
le siège (9), par rapport à la direction avant arrière du véhicule à selle, est supporté à l'extrémité arrière du véhicule à selle grâce à l'ossature de cadre (2) par l'intermédiaire de l'élément formant articulation (50) ce qui permet ainsi au siège (9) de basculer verticalement,
le point d'accouplement sur le côté de l'ossature (A) est situé en arrière par rapport au point d'accouplement sur le côté du siège (B) dans la direction avant arrière du véhicule à selle, un casier de stockage (10) est placé sur l'ossature de cadre (2), et le siège (9) est configuré pour ouvrir et fermer une ouverture à l'extrémité supérieure (10') d'une section formant réceptacle (10a) du casier de stockage (10),ce qui est **caractérisé en ce que** le point d'accouplement sur le côté de l'ossature (A) est situé plus à proximité de l'axe de mouvement de basculement (E) de l'élément formant articulation (50) que du point d'accouplement sur le côté du siège (B),
le point d'accouplement sur le côté du siège (B) du mécanisme de génération de force de sollicitation (23) est situé dans la direction avant arrière du véhicule à selle en arrière d'une surface d'extrémité arrière (10d) de la section formant réceptacle (10a) du casier de stockage (10) lorsque le siège (9) est fermé, et
le point d'accouplement sur le côté de l'ossature (A) est positionné plus haut que le point d'accouplement sur le côté du siège (B) et plus bas que l'axe de mouvement de basculement (E) de l'élément formant articulation (50) du siège (9) lorsque le siège (9) est fermé.

2. véhicule à selle selon la revendication 1, **caractérisé en ce que** le point d'accouplement sur le côté de l'ossature (A) est situé sur le côté opposé du siège (9) par rapport à une ligne droite (D) reliant le point d'accouplement sur le côté du siège (B) et l'axe de mouvement de basculement (E) de l'élément formant articulation (50).

3. Véhicule à selle selon la revendication 1 ou 2, **caractérisé en ce que** le mécanisme de génération de force de sollicitation (23) est configuré pour générer la force de sollicitation dans une direction d'extension dudit mécanisme de génération de force de sollicitation (23).

4. véhicule à selle selon l'une des revendications 1 à 3, **caractérisé en ce que** le mécanisme de génération de force de sollicitation (23) est situé de telle sorte qu'au moins le point d'accouplement sur le côté de l'ossature (A) est situé dans la direction avant arrière du véhicule à selle en arrière du casier de stockage (10).

5. véhicule à selle selon l'une des revendications 1 à 4, **caractérisé en ce que** le mécanisme de génération de force de sollicitation (23) est incliné vers le bas et vers le front du véhicule à selle lorsque le siège (9) est fermé ou dans une position pratiquement horizontale.

6. véhicule à selle selon l'une des revendications 1 à 5, **caractérisé en ce que** le mécanisme de génération de force de sollicitation (23) est accouplé au siège (9) au moyen d'une articulation à rotule (23f)

7. Véhicule à selle selon l'une des revendications 1 à 6, **caractérisé en ce que** le mécanisme de génération de force de sollicitation (23) comprend un ressort.

8. véhicule à selle selon la revendication 7, **caractérisé en ce que** le mécanisme de génération de force de sollicitation (23) comprend un mécanisme d'amortissement hydraulique ou à friction.

9. Véhicule à selle selon l'une des revendications 1 à 8, **caractérisé en ce qu'**une pluralité de mécanismes de génération de force de sollicitation (23) est prévue, lesquels sont agencés côte à côte dans la direction de la largeur du véhicule à selle.

10. véhicule à selle selon la revendication 9, **caractérisé en ce qu'**une paire de mécanismes de génération de force de sollicitation (23) est prévue, dont l'un est prévu sur le côté gauche du siège (9) et dont l'autre est prévu sur le côté droit du siège (9).
